# FASCICULE DE BREVET EUROPEEN

(11) **EP 0 957 601 B1**
(45) Date de publication et mention de la délivrance du brevet: **15.12.2004**
(21) Numéro de dépôt: 99401107.0
(22) Date de dépôt: 06.05.1999
(51) Int. Cl.: H04H 1/00, H04B 7/185, H04N 7/16

(54) **Système de communication par satellite pour la diffusion de programmes audiovisuels et de données multimédia**
Satelliten Kommunikationsanordnung um audiovisuelle Programme und Multimediadaten zu senden
Satellite communication system for audiovisual programmes and multimedia data broadcast

(30) Priorité: 14.05.1998 FR 9806083
(43) Date de publication de la demande: 17.11.1999
(73) Titulaire: ALCATEL, 75008 Paris (FR)
(72) Inventeur: Gayrard, Jean-Didier, 31520 Ramonville St. Agne (FR)
(74) Mandataire: Lamoureux, Bernard

(56) Documents cités:
- FR-A- 2 723 279
- JOURNAL OF THE INSTITUTION OF ELECTRONIC AND RADIO ENGINEERS, vol. 55, no. 10, octobre 1985 (1985-10), pages 331-334, XP002090234 London, Great-Britain

## Description

La présente invention concerne un système de communication par satellite pour la diffusion de programmes audiovisuels et de données multimédia.

Le brevet français n° FR-A-2 723 279 décrit un système de communication de ce type comprenant une pluralités d'émetteurs dont chacun émet un signal d'émission véhiculant un programme de télévision et un satellite comprenant un multiplexeur combinant lesdits sigaux d'émission pour former un multiplex d'émission- qui est diffusé à des récepteurs d'utilisateurs par un canal de fréquence descendant.

Plus précisément, un signal d'émission comprend un signal audio, un signal video et, éventuellement, des données. Le codage des signaux audio et video peut être conforme à la norme MPEG-2 (Moving Picture Expert Group No. 2) bien connue (norme ISO/IEC 13 818). Ce signal d'émission, structuré en paquets de transport, est transmis conformément à la norme DVB-S (Digital Video Broadcasting by Satellite) également bien connue (norme ETS 300 421). Un paquet de transport MPEG2 comprend 4 octets d'entête, 184 octets de charge utile et, éventuellement, 16 octets de redondance pour un code correcteur d'erreur. Ces paquets de transport sont transmis sur un canal de fréquence montant.

Dans ce système, au niveau des émetteurs, l'allocation des canaux de fréquence montants est fixe ou quasi-fixe. Ensuite, dans le satellite, la sélection des canaux s'effectue par filtrage à l'aide de composants passifs ; elle est donc fixe. Puis, le multiplexage fournissant le multiplex d'émission est séquentiel ; il est donc fixe lui aussi. Un bouquet de programmes est ainsi défini seulement par l'affectation de canaux fréquences aux émetteurs fournissant les programmes du bouquet de programmes.

L'inconvénient d'un tel système est que l'opérateur de diffusion de programmes de télévision est dépendant des sources de programmes et des émetteurs, dans la composition de son bouquet de programmes. Cela manque de souplesse et cause des coûts d'exploitation additionnels.

Un problème semblable se pose en ce qui concerne des données d'information et de service, dites données SI (également définies par les normes mentionnées plus haut), qui contiennent pour partie au moins des données qui sont transmises aux utilisateurs pour leur permettre d'exploiter le multiplex d'émission. Bien entendu, de telles données SI peuvent être réunies dans une station et fournies à un émetteur comme un programme particulier devant être diffusé. Cela demande des moyens spécifiques, en addition des moyens de commande de programmes, ce qui représente des contraintes et un coût additonnels qu'il serait souhaitable de limiter.

L'invention apporte une solution plus simple et moins onéreuse à ces problèmes.

Le système de communication par satellite pour la diffusion de programmes audiovisuels et de données multimédia de l'invention comprend :
- dans deux stations au sol au moins, des -moyens de transmission de programmes vers un satellite, chaque programme étant transmis sur un canal de fréquence montant,
- dans un satellite, des moyens de multiplexage de programmes recevant au moins deux desdits programmes et acheminant ceux-ci sur un unique canal de fréquence descendant.

Il se caractérise en ce qu'il comprend, additionnellement :
- dans une station de configuration au sol, des moyens de transmission de données de système, ces données étant transmises dans un canal de fréquence montant au moins,
- dans le satellite, des moyens de réception de telles données de système. associés audit canal de fréquence montant au moins,
- dans ce satellite, des moyens de configuration permettant d'associer sélectivement des canaux de fréquence montants et un canal de fréquence descendant, en réponse à certaines au moins desdites données de système reçues par lesdits moyens de réception, ces dernières données constituant des données de configuration.

Selon une forme de mise en oeuvre, lesdites données de système sont transmises sous la forme d'un programme dédié à cet usage et ainsi insérées dans un canal de fréquence montant dédié à ce programme .

Selon une forme de mise en oeuvre de l'invention, lesdits moyens de configuration comprennent des moyens de sélection desdites données de configuration reçues et des moyens de commande de configuration pour déterminer en conséquence la mise en oeuvre de la configuration reçue.

Lorsque lesdits moyens de configuration consistent essentiellement en un multiplexeur de paquets de transport issus de plusieurs canaux de fréquence montants, lesdits moyens de commande déterminent les identités des canaux de fréquence dont ledit multiplexeur reçoit les paquets de transport, pour les multiplexer dans ledit canal de fréquence descendant.

Selon une autre caractéristique, lesdites données de système comprennent des données d'information de service qui sont réémises par le satellite dans ledit canal de fréquence descendant.

Par ailleurs, le système de communication de l'invention comprend un dispositif de traitement d'information de service recevant l'information de service de programmes composant un bouquet de programme et compilant cette information-pour constituer une information de service de bouquet de programme qui est insérée dans un programme dudit canal de fréquence descendant.

Selon une forme de mise en oeuvre, ledit dispositif de traitement d'information de service est couplé à un canal de fréquence montant pour en recevoir de l'information de configuration déterminant les conditions de ladite compilation d'information de service.

Selon une forme de mise en oeuvre, ledit dispositif de traitement d'information de service est couplée audit canal de fréquence descendant par des moyens d'extraction extrayant des paquets d'information de service et les remplaçant au besoin par des paquets de bourrage.

Les différents objets et caractéristiques de la présente invention apparaîtront plus clairement dans la description qui va suivre d'un mode de mise oeuvre de l'invention, donné à titre d'exemple non limitatif, en se reportant aux figures annexées qui représentent :
- la figure 1, un diagramme général d'un système de communication conforme à l'invention,
- la figure 2, un mode de réalisation du satellite SAT de la figure 1,
- la figure 3, le format de paquets transmis dans le système de communication de la figure 1,
- la figure 4, un mode de réalisation d'un émetteur tel que El du système de communication de la figure 1,
- la figure 5, un mode de réalisation du processeur de canaux PROC du satellite SAT de la figure 2,
- la figure 6, un format de la charge utile d'un paquet de configuration,
- la figure 7, une variante du processeur de canaux de la figure 5, permettant de composer un bouquet de programmes à partir de programmes appartenant à plusieurs liaisons montantes,
- la figure 8, une variante du processeur de canaux de la figure 5, comprenant des aménagements pour le traitement dans le satellite de l'information de service SI.

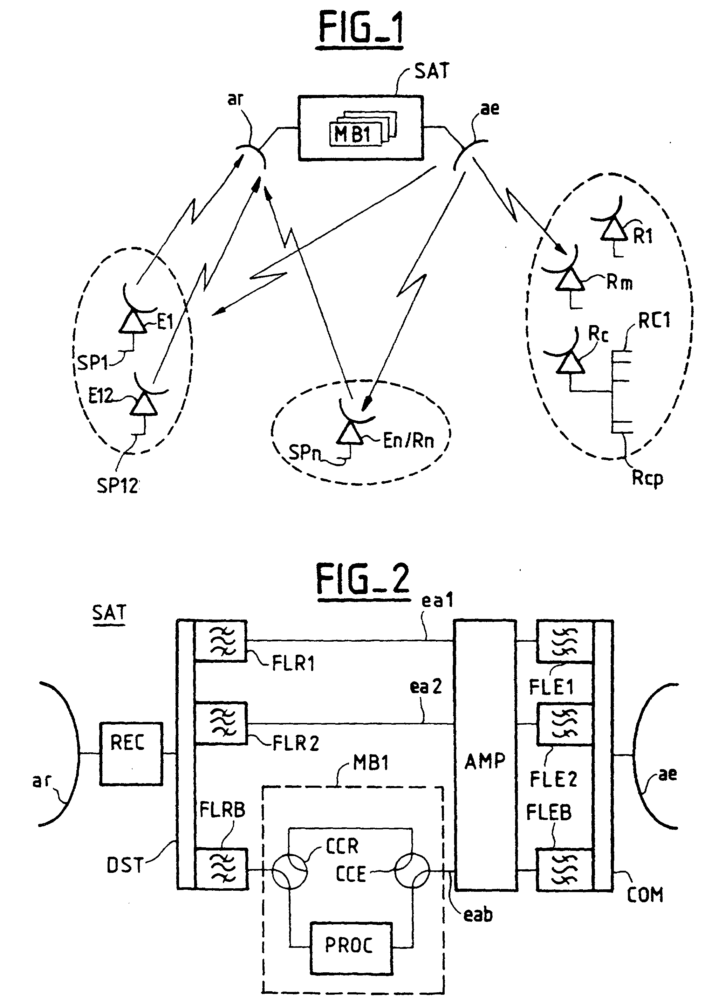

La figure 1 est une illustration générale du système de communication de l'invention. Cette figure représente des sources de programmes SP1, SP12, couplées à des émetteurs E1, E12, dont les antennes émettent vers un satellite SAT. Les signaux correspondants sont reçus par une antenne de réception ar du-satellite SAT, dans lequel au moins un ensemble de multiplexage MB1 réunit les signaux ainsi reçus en un signal d'émission fourni à une antenne d'émission ae et transmis en direction de récepteurs R1, Rm, Rc.

Les programmes SP1, SP12 sont en nombre variable selon les applications et variable aussi au cours du temps pour une même application. Chacun des émetteurs E1, E12 les transmet sur un canal de fréquence montant qui lui est attribué en propre. L'ensemble de multiplexage MB1, démodule différents canaux de fréquence montants et décode les signaux de programme portés par chacun d'eux. Il multiplexe ces derniers en un signal multiplexé contenant un bouquet de programmes, lequel est codé et module une porteuse d'un canal de fréquence descendant. Bien entendu la largeur de bande du canal de fréquence descendant est suffisante pour accommoder l'ensemble des signaux de programmes issus des canaux de fréquence montants. Chacun des récepteurs R1, Rm, Rc reçoit le canal de fréquence descendant et en exploite le contenu. Les récepteurs R1_{,} Rm sont des récepteurs d'usagers individuels et sont, par exemple, agencés pour sélectionner un programme et l'afficher sur l'écran d'un téléviseur. Le récepteur Rc est là pour illustrer le cas d'un récepteur tête de réseau de distribution vers des usagers multiples, Rc1, Rcp.

A ce que l'on vient de décrire, selon l'invention, s'ajoute une source de données de système Spn couplée à un émetteur En dont l'antenne émet de telles données de système vers le satellite SAT. L'émetteur En est associé à un récepteur Rn qui reçoit du satellite SAT le canal de fréquence descendant décrit précédemment. La fonction essentielle de ce récepteur est de permettre le contrôle de ce que diffuse le satellite SAT.

Les données de système Spn comprennent notamment des données de configuration transmises au satellite SAT. Dans ce dernier, aménagé pour intercepter de telles données et pour les exploiter, de la manière qui sera décrite ultérieurement, les données de configuration déterminent entre autres quels canaux de fréquence montants doivent être multiplexés pour composer le bouquet de programme. L'opérateur de diffusion de programmes a ainsi la possibilité, sans intermédiaire, de contrôler la composition du bouquet de programme. Le récepteur Rn lui permet d'ailleurs d'exercer un contrôle sur l'effet de telles commandes de configuration.

Bien entendu ce que l'on vient de décrire concerne un bouquet de programmes. Le même satellite SAT peut traiter, de façon similaire, un ou plusieurs autres bouquets de programme occupant des bandes de fréquences différentes, ou encore un ou plusieurs flux de données multimedia. Il peut encore traiter, mais plus simplement, des bouquets de programmes composés à terre ; dans ce cas, le satellite est un simple répéteur. Il peut enfin traiter, toujours comme un simple répéteur, des liaisons de transmission à grand débit autres que des bouquets de programme.

On en verra une illustration dans le diagramme de la figure 2 qui représente, de façon plus détaillée mais encore générale, l'équipement du satellite SAT de la figure 1. On y retrouve les antennes réception ar et émission ae, ainsi que l'ensemble de multiplexage MB1.

Plus précisément, le signal capté par l'antenne réception ar est reçu par un récepteur REC, pour être fourni à un distributeur DST qui en répartit l'énergie en direction de filtres de liaison réception FLR1, FLR2, FLRB. Ces filtres sélectionnent chacun une liaison de réception, c'est-à-dire une bande de fréquence assez large pour contenir les canaux de fréquence montants décrits en se reportant à la figure 1. Plus précisément, le filtre FLRB sélectionne la bande de fréquence contenant ces canaux de fréquence. Le commutateur CCR étant dans la position représentée, la bande de fréquence en question est fournie à un processeur de canaux PROC dont la fonction est celle qui a été décrite plus haut dans la description de l'ensemble de multiplexage MB1. Ce processeur produit ainsi un signal de canal de fréquence descendant, lequel, le commutateur CCE étant dans la position représentée, est fourni à une entrée eab d'un ensemble d'amplification AMP.

Les commutateurs CCR et CCE permettent, en les basculant dans une position inverse (par une rotation d'un quart de tour), de connecter directement la sortie du filtre FLRB à l'entrée eab de l'ensemble d'amplification AMP. Ce sera le cas, tant que le bouquet de programmes dont il est question sera composé au sol et transmis dans un canal de fréquence montant à large bande.

Les sorties des filtres FLR1 et FLR2 sont quant à elles connectées en permanence directement à des entrées correspondantes ea1 et ea2 de l'ensemble d'amplification AMP. Il s'agit dans ces cas, comme évoqué plus haut, de liaisons large bande pour lesquelles le satellite SAT ne joue qu'un rôle de répéteur.

Après amplification, les signaux des entrées ea1, ea2, eab, sont appliquées dans l'ordre à des filtres de liaison émission FLE1, FLE2, FLEB, dont les sorties, par un combineur COM attaquent l'antenne émission ae.

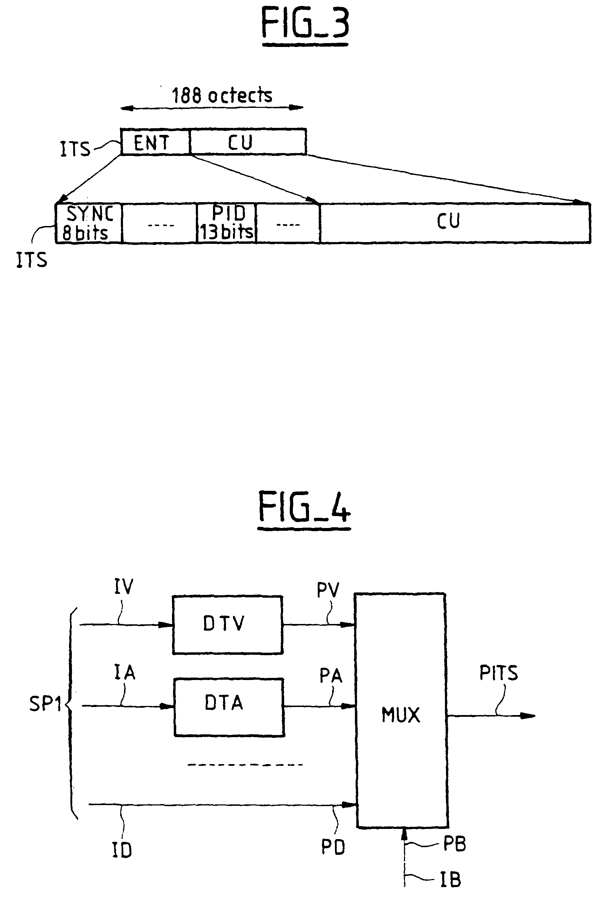

La figure 3 représente les signaux transportés par les canaux de fréquence décrits en se référant à la figure 1, aussi bien montants que descendants, dans le cas d'une transmission de type MPEG-2. Ces signaux forment des paquets ITS de 188 octets, comprenant une en-tête ENT et une charge utile CU, auxquels, comme déjà mentionné, peuvent s'ajouter 16 octets de redondance pour un éventuel code correcteur d'erreur. A la ligne inférieure, on voit que l'en-tête comprend, après un octet de synchronisation SYNC, et d'autres données dont il ne sera pas question ici, un indicateur de programme PID à 13 bits. C'est ainsi que le canal de fréquence descendant, acheminant des paquets portant des PID différents, véhicule autant de programmes différents. Le même système est d'ailleurs appliqué sur les canaux de fréquence montant, comme on va le voir.

La figure 4 représente, en effet, un mode de réalisation d'un émetteur tel que E1, à la figure 1. L'information de programme SP1 comprend une information vidéo IV, une information audio IA, une information de données ID. L'information vidéo IV est traité conformément à la norme MPEG-2 dans un dispositif de traitement vidéo DTV qui produit des paquets PV conformes au format de la figure 3. Ces paquets seront collectivement identifiés par un indicateur PID qui leur est affecté. De même, l'information audio lA est traité conformément à la norme MPEG-2 dans un dispositif de traitement audio DTA qui produit des paquets PA conformes au format de la figure 3 avec un autre indicateur PID. Par ailleurs, le signal de données ID est également conforme au format de la figure 3. Il contient par exemple des données d'accompagnement du programme SP1, avec encore un autre indicateur PID. Additionnellement, une information de bourrage IB est également disponible sous le format de la figure 3. Elle obéit à un format particulier aisément reconnaissable. Un multiplexeur de paquets MUX, prélève cycliquement un paquet PV, PA, PD, ou PB, dans l'ordre. Si un paquet PV est disponible, il est transmis, tel quel, dans un flux de paquets PITS. Après codage de canal, ce paquet module la porteuse du canal de fréquence. S'il n'y a pas de paquet PV, un paquet PA disponible est transmis ; s'il n'y en a pas, un paquet PD disponible est transmis ; s'il n'y en a pas non plus, c'est un paquet de bourrage PB qui est transmis.

Le cas de l'émetteur En de la figure 1 est semblable à ce que l'on vient de décrire en se référant à la figure 4, sauf en ce que l'information vidéo IV et l'information lA peuvent être absentes, auquel cas on peut faire l'économie des dispositifs DTV et DTA et simplifier le multiplexeur MUX. Cela n'est pas obligatoire et dépend en fait des débits respectifs des informations IV, lA et ID, par rapport au débit global de paquets PITS permis par le canal de fréquence.

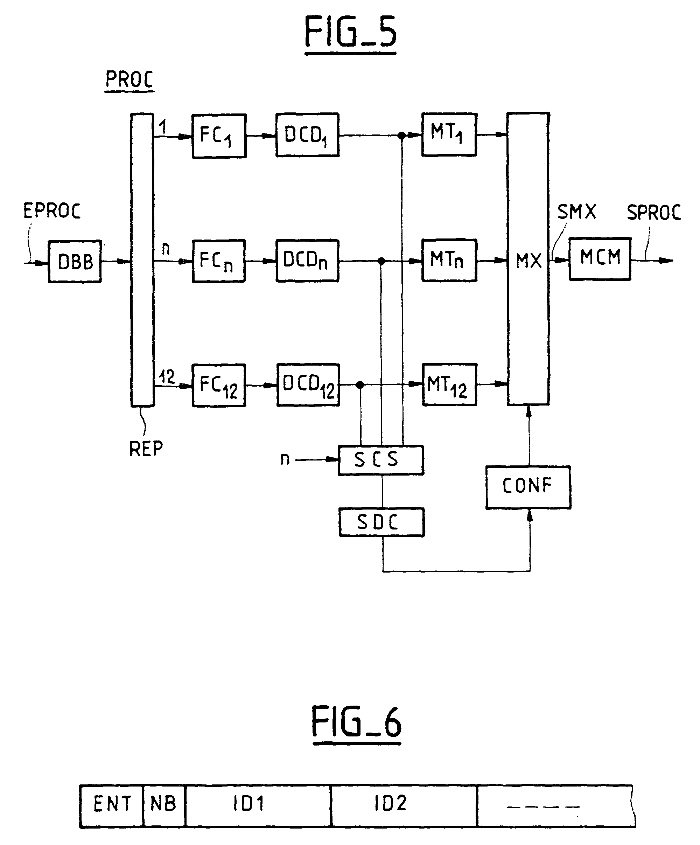

On va maintenant, en se reportant à la figure 5, décrire un mode de réalisation du processeur de canaux PROC du satellite SAT de la figure 2. Il comprend une entrée de liaison montante EPROC, correspondant à la sortie inférieure du commutateur de réception CCR de la figure 2, couplée à la sortie du filtre de liaison réception FLRB. Le signal sur cette entrée, comprenant par exemple 12 canaux de fréquence adjacents dans une bande de fréquence de liaison montante de 36 Mhz sélectionnée par le filtre FLRB (fig.2), est d'abord amplifié et transposé en bande de base dans un module frontal DBB, pour attaquer un répartiteur REP qui en distribue l'énergie (également) à 12 filtres de canaux FC₁, FCₙ, FC₁₂, suivis chacun d'un démodulateur et décodeur DCD₁, DCDₙ, DCD₁₂, lesquels restituent chacun un signal de programme SP1, SPn, SP12 correspondant, sous la forme de paquets tels que celui qui est illustré par la figure 3. Ces paquets sont enregistrés dans des mémoires tampon correspondantes MT₁, MTₙ, MT₁₂, en vue de leur retransmission au sein d'un bouquet de programmes composé par un multiplexeur MX dont la sortie SMX est connectée à un ensemble de codage et de modulation MCM délivrant le signal de liaison descendante, également dans une bande de fréquence de 36 Mhz, sur la sortie SPROC, connectée (voir fig. 2) à l'accès inférieur du commutateur émission CCE et par conséquent à une entrée de l'ensemble d'amplification AMP, pour transmission par l'antenne ae du satellite SAT.

Additionnellement, le processeur de canaux comprend des moyens de configuration permettant d'associer sélectivement certains des canaux de fréquence montants au canal de fréquence descendant. Ces moyens comprennent un sélecteur de canal de système SCS, recevant une indentité de canal n qui peut être une constante du système de communication ou un paramètre transmis par le canal de télémesure/télécommande, ou par tout autre moyen. Ce sélecteur SCS sélectionne ainsi les paquets d'un des canaux de fréquence, du canal de rang n en l'occurrence, fournis par le dispositif DCDn, et les transmet à un sélecteur de paquets de configuration SDC lequel exploite une information contenue dans la charge utile de ces paquets.

La charge utile d'un paquet de configuration représentée à la figure 6 comprend un en-tête ENT, un indicateur NB donnant le nombre de programmes composant le bouquet et une série d'indicateurs de programmes ID1, ID2..., identifiant et définissant des programmes individuellement. Plusieurs paquets de configuration tels que celui de la figure 6 peuvent être nécessaires pour véhiculer l'information de configuration complète d'un bouquet de programmes. Le sélecteur de paquets de configuration SDC reconnaît la valeur particulière de l'indicateur PID identifiant tout paquet porteur de configuration. Il enregistre alors le contenu de tels paquets, reconstitue des indicateurs NB, ID1, ID2..., constituant une information de configuration complète et les transmet au dispositif de commande de configuration CONF, lequel exploitant ces indicateurs détermine le fonctionnement du multiplexeur MX, de façon que celui-ci collecte et transmette vers la sortie SPROC des paquets fournis par les dispositifs DCD₁, DCD₂ ....

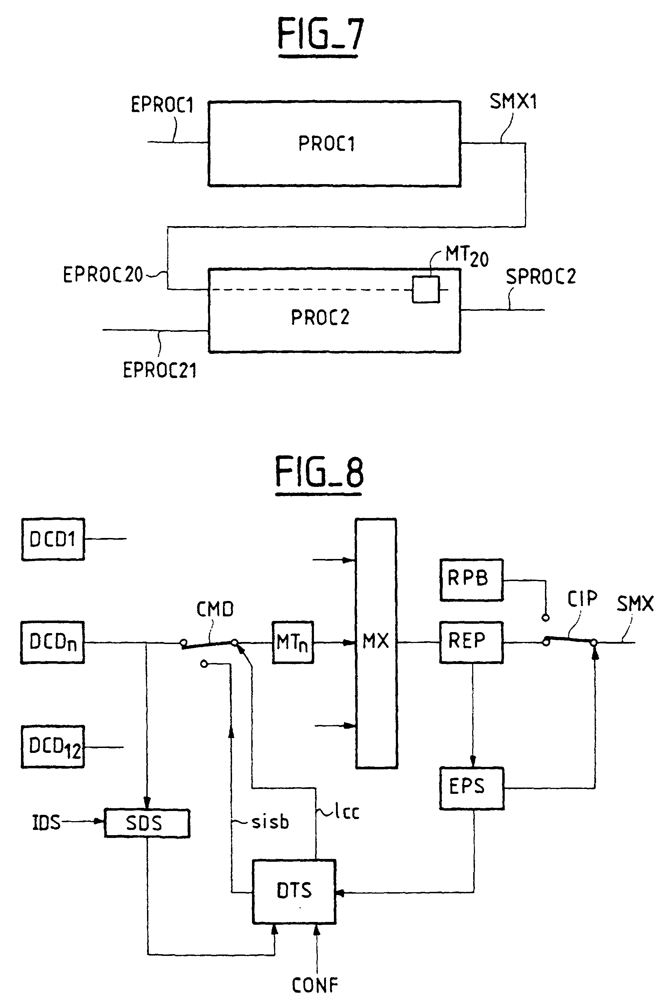

On verra par la suite, dans la description relative à la figure 8, que des moyens additionnels peuvent être prévus pour informer les utilisateurs de la configuration appliquée et/ou applicable.

Il suffit donc à l'opérateur de programmes d'inclure dans le programmes Spn des paquets tels que ceux que l'on vient de décrire, pour obtenir que le bouquet de programmes soit composé selon son bon vouloir. Il peut le changer tout aussi facilement et cela sans intervention au niveau des émetteurs de programmes, ni au niveau de l'opérateur du satellite.

Les dispositions que l'on vient de décrire admettent bien entendu de nombreuses variantes. Les formats de transmission n'ont en particulier été donnés qu'à titre d'exemple. La transmission de cellules de type ATM pourrait être adoptée, en remplacement de la transmission de paquets décrite, ou pour contenir de tels paquets dans la charge utile de ces cellules. Le sélecteur de canal de système n'est pas indispensable. si l'identité du canal de système est une constante du système de communication. Le canal de système a été représenté comme un canal de programme, susceptible de fournir des paquets de programme transmis à la mémoire tampon MTₙ et de les acheminer, dans le cas où la configuration le prévoit, par le multiplexeur MX sur la sortie SPROC. Dans un tel cas, une liaison supplémentaire entre le sélecteur de paquets de configuration SDC et la mémoire tampon MTₙ pourrait utilement empêcher l'enregistrement dans la mémoire tampon d'un paquet de configuration et sa transmission dans le bouquet de programme où il n'a pas sa place. Mais, comme on le verra ultérieurement, une alternative consiste à attribuer la totalité du canal à la transmission d'information de système, c'est-à-dire à l'utiliser comme voie de service. Dans un tel cas, la connexion DCDₙ-MTₙ n'existerait pas.

Une autre variante est représentée par la figure 7. Elle consiste en la composition d'un bouquet de programmes à partir de canaux de fréquence appartenant à plusieurs liaisons montantes.

Une première liaison montante est dotée, dans le satellite, d'un processeur de canaux PROC1, dont l'entrée EPROC1 est semblable à l'entrée EPROC du processeur de la figure 5, mais dont la sortie SMX1 est semblable à la sortie SMX du multiplexeur MX de la figure 5. Il fournit des paquets multiplexés à une entrée EPROC20 d'un deuxième processeur de canaux PROC2 ayant une entrée EPROC21 semblable à l'entrée EPROC du processeur de la figure 5, et dont la sortie SPROC2 est semblable à la sortie SPROC du processeur de canaux PROC de la figure 5. Dans le processeur de canaux PROC2, comme indiqué, l'entrée EPROC20 est directement connectée à une mémoire tampon MT20 de manière que les paquets assemblés dans le processeur de canaux PROC1 à partir de canaux de fréquence montants sélectionnés sur la liaison d'entrée EPROCI de la façon décrite en rapport avec la figure 5 soient traités comme des paquets d'autres canaux de fréquence également sélectionnés, mais dans le processeur de canaux PROC2, à partir des canaux de fréquence de la liaison d'entrée EPROC21. Un bouquet de programmes peut ainsi être constitué, en généralisant, à partir de canaux de fréquence de plusieurs liaisons montantes.

On va maintenant considérer un autre aspect de la présente invention qui concerne l'information de service (SI). Les normes MPEG-2 et DVB-SI prévoient qu'un programme audioviduel comprend, outre au moins une information vidéo et une information audio (voir description relative à la figure 4), une information de service qui prend place parmi des données transmises dans certains paquets de ce programme, dûment identifiés par un PID particulier. Cette information de service comprend notamment des tables PAT, PMT, CAT, NIT (voir la norme) qui définissent le programme transmis et qui sont nécessaires pour exploiter l'information transmise dans les paquets de ce programme.

Dans le mode de réalisation décrit en se référant à la figure 5, il est implicitement admis que les programmes sont ainsi transmis tels qu'ils sont composés à l'origine. La notion de bouquet n'intervient pas en ce qui concerne l'information de service.

II est toutefois également possible, toujours en se référant au mode de réalisation de la figure 5, que les informations de service des plusieurs sources de programmes composant un bouquet de programme soient réunies dans une station au sol, soient compilées pour fournir une information de service de bouquet de programmes et composent par exemple un flux de paquets du programme SPn. Une telle information de service de bouquet de programmes serait transmise par le satellite de la figure 5, comme un programme du bouquet de programmes, de la manière décrite précédemment. L'objection que l'on peut faire à cet égard est la même que celle qui concerne la composition au sol du bouquet de programme. Cela nécessite des liaisons au sol pour ce besoin particulier, ce qui est coûteux et il est souhaitable d'en faire l'économie.

La figure 8 représente des modifications à apporter au satellite de la figure 5, de manière à introduire la constitution d'une information de service de bouquet de programme dans le satellite, à la manière dont cette constitution est faite au sol, mais sans exiger des liaisons au sol pour cet usage.

On a représenté sur la figure 8, pour simplifier, certains seulement des éléments déjà décrits de la figure 5, soit DCD₁,DCDₙ,DCD₁₂, MTₙ, MX. Bien entendu le multiplexeur de canaux de la figure 8 comprend aussi les autres éléments de la figure 5, inchangés dans leur structure et leur fonction. Si l'on suppose que des commutateurs additionnels CMD et CIP sont dans la position représentée, le multiplexeur de canaux de la figure 8 fonctionne exactement comme celui de la figure 5, un registre d'examen de paquets REP inséré avant la sortie SMX n'apportant qu'un retard à la transmission du signal de la liaison descendante.

Mais le multiplexeur de canaux de la figure 8 comprend également un sélecteur de paquet de commande de service SDS, qui reçoit une identité de paquet IDS et qui sélectionne ainsi certains paquets pour les transmettre à un dispositif de traitement de l'information de service DTS. Par ailleurs, le registre d'examen de paquets REP connecté à un extracteur de paquets d'information de service EPS qui lit les paquets de la liaison descendante, reconnaît les paquets d'information de service des différents programmes, les aiguille vers le dispositif de traitement de l'information de service DTS, lorsque celui-ci est actif, et actionne alors le commutateur d'interception de paquets CIP, qui remplace le paquet ainsi aiguillé par un paquet de bourrage fourni par un registre de paquet de bourrage RPB. Ensuite, le commutateur CIP retourne dans la position représentée et la transmission des paquets de programmes reprend.

Le dispositif de traitement de l'information de service reçoit ainsi du programme SPn (voir fig. 1) par le canal montant qui lui est dédié, une information de configuration du traitement de l'information de service sélectionnée par le sélecteur SDS. Il reçoit, par l'extracteur de paquets d'information de service EPS, les paquets contenant l'information de service de tous les programmes du bouquet de programme composé dans le satellite comme décrit en se référant à la figure 5. Conformément à l'information de configuration, il effectue une compilation de ces informations de service de programmes résultant en un information de service de bouquet de programmes qu'il fournit sur une sortie sisb. Parallèlement, par une liaison de commande de commutateur, le dispositif DTS commande le changement de position du comutateur CMD, afin que les paquets d'information de service de bouquet de programmes fournis sur la liaison sisb soient transmis à la mémoire tampon MTₙ et soient par conséquent transmis sur la liaison descendante, dans un canal de transmission ainsi affecté à l'information de service du bouquet de programmes.

D'une façon générale, un dispositif de traitement tel que DTS, recevant d'un canal montant, dans des données de système, de l'information de configuration du traitement de l'information de service et connecté aux canaux de la liaison descendante permet de déplacer vers le satellite des fonctions qui, accomplies au sol, avant transmission vers le satellite, demanderaient des liaisons sol vers une station de traitement, ce qui est une solution tout à la fois souple et économique.

De la même façon, comme indiqué par une flèche de liaison CONF, le dispositif de traitement DTS peut aussi être aménagé pour recevoir du dispositif de commande de configuration CONF de l'information de configuration du bouquet de programmes et retransmettre une telle information dans un paquet d'information de service de configuration de bouquet de programmes transmis sur la liaison sisb et diffusés via le multiplexeur MX, tout comme les paquets d'information de service de bouquet de programme mentionnés au précédent paragraphe.

## Revendications

1. Système de communication par satellite pour la diffusion de programmes audiovisuels et de données multimédia comprenant :
- dans deux stations au sol au moins (E1, E12), des moyens de transmission de programmes (SP1, SP12) vers un satellite, chaque programme étant transmis sur un canal de fréquence montant,
- dans un satellite (SAT), des moyens de multiplexage de programmes (MB1) recevant au moins deux desdits programmes et acheminant ceux-ci sur un unique canal de fréquence descendant.
**caractérise en ce qu'**il comprend, additionnellement :
- dans une station de configuration au sol (En/Rn), des moyens de transmission de données de système (SPn), ces données étant transmises dans un canal de fréquence montant au moins,
- dans le satellite (SAT), des moyens de réception (PROC) de telles données de système, associés audit canal de fréquence montant au moins,
- dans ce satellite, des moyens de configuration (SCS, SDC, CONF, MX) permettant d'associer sélectivement des canaux de fréquence montants et un canal de fréquence descendant, en réponse à certaines au moins desdites données de système reçues par lesdits moyens de réception, ces dernières données constituant des données de configuration:

2. Système de communication conforme à la revendication 1, **caractérisé en ce que** lesdites données de système (Spn) sont transmises sous la forme d'un programme dédié à cet usage et ainsi insérées dans un canal de fréquence montant dédié à ce programme.

3. Système de communication conforme à la revendication 1, **caractérisé en ce que** lesdits moyens de configuration (PROC) comprennent des moyens de sélection (SCS) desdites données de configuration reçues et des moyens de commande de configuration (SDC, CONF) pour déterminer en conséquence la mise en oeuvre de la configuration reçue.

4. Système de communication conforme à la revendication 3, **caractérisé en ce que** lesdits moyens de configuration comprenant un multiplexeur (MX) de paquets de transport issus de plusieurs canaux de fréquence montants, lesdits moyens de commande (SDC, CONF) déterminent les identités des canaux de fréquence dont ledit multiplexeur (MX) reçoit les paquets de transport, pour les multiplexer dans ledit canal de fréquence descendant.

5. Système de communication conforme à la revendication 1, **caractérisé en ce que** lesdites données de système comprennent des données d'information de service qui sont réémises par le satellites dans ledit canal de fréquence descendant.

6. Système de communication conforme à l'une quelconque des revendications précédentes, **caractérisé en ce qu'**il comprend un dispositif de traitement d'information de service (DTS) recevant l'information de service de programmes composant un bouquet de programme et compilant cette information pour constituer une information de service de bouquet de programme (sisb) qui est insérée dans un programme dudit canal de fréquence descendant.

7. Système de communication conforme à la revendication 6, **caractérisé en ce que** ledit dispositif de traitement d'information de service (DTS) est couplé à un canal de fréquence montant pour en recevoir de l'information de configuration déterminant les conditions de ladite compilation d'information de service.

8. Système de communication conforme à la revendication 6, **caractérisé en ce que** ledit dispositif de traitement d'information de service (DTS) est couplée audit canal de fréquence descendant par des moyens d'extraction (REP, EPS, CIP, RPB) extrayant des paquets d'information de service relative aux programmes et les remplaçant au besoin par des paquets de bourrage.

9. Système de communication conforme à la revendication 6 ou 8, **caractérisé en ce que** ledit dispositif de traitement d'information de service (DTS) est couplé audit canal de fréquence descendant par des moyens d'extraction (REP, EPS, CIP, RPB) extrayant des canaux de programmes des paquets d'information de service relative aux programmes et insérant dans un canal de service des paquets d'information de service relative au bouquet de programme composés par compilation desdites informations de service relatives aux programmes.

10. Système de communication conforme à la revendication 4, **caractérisé par le fait que** lesdits moyens de commande de configuration (SDC, CONF) insèrent, via ledit multiplexeur (MX) de paquets de transport des informations de configuration appliquée et applicable et l'état desdits moyens de réception (PROC).

## Patentansprüche

1. Satelliten-Kommunikationsanordnung zur Übertragung von audiovisuellen Programmen und Multimedia-Daten, bestehend aus:
- in mindestens zwei Bodenstationen (E1, E12), Vorrichtungen zur Übertragung von Programmen (SP1, SP12) an einen Satelliten, wobei jedes Programm auf einem Aufwärtsfrequenzkanal übertragen wird;
- in einem Satelliten (SAT), Vorrichtungen zum Programm-Multiplexing (MB1), die mindestens zwei der genannten Programme empfangen und diese über einen einzigen Abwärtsfrequenzkanal weiterleiten,
**dadurch gekennzeichnet, dass** sie zusätzlich beinhaltet:
- in einer Boden-Konfigurationsstation (En/Rn), Vorrichtungen zur Übertragung von Systemdaten (SPn), wobei diese Daten in mindestens einem Aufwärtsfrequenzkanal übertragen werden;
- im Satelliten (SAT), Vorrichtungen zum Empfang (PROC) solcher Systemdaten, die mit dem genannten, mindestens einen Aufwärtsfrequenzkanal verbunden sind,
- in diesem Satelliten (SAT), Vorrichtungen zur Konfiguration (SCS, SDC, CONF, MX), die die Möglichkeit bieten, Aufwärtsfrequenzkanäle und einen Abwärtsfrequenzkanal selektiv als Reaktion auf bestimmte, zumindest auf die genannten Systemdaten zuzuordnen, die über die genannten Empfangsvorrichtungen empfangen werden, wobei diese letzteren Konfigurationsdaten darstellen.

2. Kommunikationsanordnung gemäß Anspruch 1, **dadurch gekennzeichnet, dass** die genannten Systemdaten (Spn) in Form eines Programms übertragen werden, das für diesen Zweck bestimmt ist, und auf diese Weise in einen Aufwärtsfrequenzkanal integriert werden, der für dieses Programm bestimmt ist.

3. Kommunikationsanordnung gemäß Anspruch 1, **dadurch gekennzeichnet, dass** die genannten Konfigurationsvorrichtungen (PROC) Vorrichtungen zur Auswahl (SCS) der genannten, empfangenen Konfigurationsdaten sowie Vorrichtungen zur Konfigurationssteuerung (SDC, CONF) enthalten, um auf diese Weise die Umsetzung der empfangenen Konfiguration festzulegen.

4. Kommunikationsanordnung gemäß Anspruch 3, **dadurch gekennzeichnet, dass** die genannten Konfigurationsvorrichtungen aus einem Multiplexer (MX) für Transportpakete bestehen, die aus verschiedenen Aufwärtsfrequenzkanälen stammen, wobei die genannten Steuervorrichtungen (SCD, CONF) die Identität der Frequenzkanäle festlegen, wobei der genannte Multiplexer (MX) die Transportpakete empfängt, um sie in dem genannten Abwärtsfrequenzkanal zu bündeln.

5. Kommunikationsanordnung gemäß Anspruch 1, **dadurch gekennzeichnet, dass** die genannten Systemdaten Service-Informationsdaten enthalten, die von dem Satelliten in dem genannten Abwärtsfrequenzkanal wieder abgestrahlt werden.

6. Kommunikationsanordnung gemäß einem der vorgenannten Ansprüche, **dadurch gekennzeichnet, dass** sie eine Vorrichtung zur Bearbeitung von Service-Informationen (DTS) beinhaltet, die die Programmservice-Informationen empfängt, die eine Programmgruppe zusammenstellen, und diese Informationen zur Service-Information der Programmgruppe (sisb) kompiliert, die in ein Programm des genannten Abwärtsfrequenzkanals integriert wird.

7. Kommunikationsanordnung gemäß Anspruch 6, **dadurch gekennzeichnet, dass** die genannte Vorrichtung zur Bearbeitung von Service-Informationen (DTS) mit einem Aufwärtsfrequenzkanal gekoppelt ist, um über diesen die Konfigurationsinformationen zu empfangen, die die Bedingungen für die genannte Kompilation von Service-Informationen bestimmen.

8. Kommunikationsanordnung gemäß Anspruch 6, **dadurch gekennzeichnet, dass** die genannte Vorrichtung zur Bearbeitung von Service-Informationen (DTS) mit dem genannten Abwärtsfrequenzkanal über Extraktionsvorrichtungen (REP, EPS, CIP, RPB) gekoppelt ist, die die Pakete mit Service-Informationen für die Programme extrahieren und diese gegebenenfalls durch Füllzeichen-Pakete ersetzen.

9. Kommunikationsanordnung gemäß Anspruch 6 oder 8, **dadurch gekennzeichnet, dass** die genannte Vorrichtung zur Bearbeitung von Service-Informationen (DTS) mit dem genannten Abwärtsfrequenzkanal über Extraktionsvorrichtungen (REP, EPS, CIP, RPB) gekoppelt ist, die die Programmkanäle mit Service-Informationspaketen für die Programme extrahieren und diese in einen Servicekanal für Service-Informationspakete in Bezug auf die Programmgruppe einfügen, die durch Kompilation der genannten Service-Informationen für die Programme zusammengestellt wurden.

10. Kommunikationsanordnung gemäß Anspruch 4, durch die Tatsache gekennzeichnet, dass die genannten Vorrichtungen zur Konfigurationssteuerung (SDC, CONF) über den genannten Multiplexer (MX) Transportpakete für angewandte und anwendbare Konfigurationsinformationen sowie den Status der genannten Empfangsvorrichtungen (PROC) einfügen.

## Claims

1. A satellite communication system for broadcasting audiovisual programs and multimedia data, comprising:
- in at least two ground stations (E1, E12), means (SP1, SP12) for transmitting programs to a satellite, each program being transmitted on an uplink frequency channel, and
- onboard a satellite (SAT), program multiplexing means (MB1) receiving at least two of said programs and routing them onto a single downlink frequency channel,
**characterized in that** it further comprises:
- in a configuration station (En/Rn) on the ground, system data transmission means (SPn), said data being transmitted on at least one uplink frequency channel,
- onboard the satellite (SAT), means (PROC) for receiving such system data associated with said at least one uplink frequency channel, and
- onboard the satellite, configuration means (SCS, SDC, CONF, MX) for selectively associating uplink frequency channels and one downlink frequency channel in response to at least some of said system data received by said receive means, the latter data constituting configuration data.

2. A communication system according to claim 1, **characterized in that** said system data (Spn) is transmitted in the form of a program dedicated to that purpose and thus inserted into an uplink frequency channel dedicated to that program.

3. A communication system according to claim 1, **characterized in that** said configuration means (PROC) comprise means (SCS) for selecting said received configuration data and configuration control means (SDC, CONF) for determining accordingly to use the received configuration.

4. A communication system according to claim 3, **characterized in that** said configuration means comprise a multiplexer (MX) for multiplexing transport packets from a plurality of uplink frequency channels and said control means (SDC, CONF) determine the identities of frequency channels of which said multiplexer (MX) receives transport packets for multiplexing them on said downlink frequency channel.

5. A communication system according to claim 1, **characterized in that** said system data comprises service information data retransmitted by the satellite on said downlink frequency channel.

6. A communication system according to any one of the preceding claims, **characterized in that** it comprises a service information processor (DTS) receiving the service information of programs constituting a bundle of programs and compiling said information to constitute program bundle service information (sisb) which is inserted into a program on said downlink frequency channel.

7. A communication system according to claim 6, **characterized in that** said service information processor (DTS) is coupled to an uplink frequency channel to receive thereon configuration information determining the conditions of said compilation of service information.

8. A communication system according to claim 6, **characterized in that** said service information processor (DTS) is connected to said downlink frequency channel by extractor means (REP, EPS, CIP, RPB) extracting service information packets relating to the programs and replacing them as required with stuffing packets.

9. A communication system according to claim 6 or claim 8, **characterized in that** said service information processor (DTS) is connected to said downlink frequency channel by extractor means (REP, EPS, CIP, RPB) extracting from the program channels service information packets relating to the programs and inserting into a service channel service information packets relating to the bundle of programs constituted by compiling said service information relating to the programs.

10. A communication system according to claim 4, **characterized in that** said configuration control means (SDC, CONF) insert packets transporting configuration information applied and applicable to the status of said receive means (PROC) via said multiplexer (MX).
